(19) Europäisches Patentamt
European Patent Office
Office européen des brevets

(11) Veröffentlichungsnummer : **0 023 671**
**B1**

(12) # EUROPÄISCHE PATENTSCHRIFT

(45) Veröffentlichungstag der Patentschrift : **03.02.82**

(51) Int. Cl.³ : **C 09 B 26/04**, C 09 B 44/00

(21) Anmeldenummer : **80104329.0**

(22) Anmeldetag : **23.07.80**

(54) **Verfahren zur Herstellung kationischer Farbstoffe.**

(30) Priorität : **04.08.79 DE 2931687**

(43) Veröffentlichungstag der Anmeldung : **11.02.81 (Patentblatt 81/06)**

(45) Bekanntmachung des Hinweises auf die Patenterteilung : **03.02.82 Patentblatt 82/05**

(84) Benannte Vertragsstaaten : **CH DE FR GB LI**

(56) Entgegenhaltungen :
**DE - A - 2 509 622**
**DE - B - 1 083 000**
**DE - B - 1 205 638**
**FR - A - 2 300 787**
**FR - A - 2 311 064**

**CHEMICAL ABSTRACTS, Band 83, Nr. 4, 28. Juli 1975, Seite 98, Zusammenfassung Nr. 29878s, Columbus, Ohio, US**

**CHEMICAL ABSTRACTS, Band 83, Nr. 10, 8. September 1975, Seite 122, Zusammenfassung Nr. 81227t, Columbus, Ohio, US**

(73) Patentinhaber : **BAYER AG**
**Zentralbereich Patente, Marken und Lizenzen**
**D-5090 Leverkusen 1, Bayerwerk (DE)**

(72) Erfinder : **Lehment, Klaus-Friedrich, Dr.**
**Theodor-Storm-Weg 6**
**D-5068 Odenthal (DE)**
Erfinder : **Raue, Roderich, Dr.**
**Berta-von-Suttner-Strasse 48**
**D-5090 Leverkusen (DE)**
Erfinder : **Gleinig, Harald, Dr.**
**Eichholzer Weg 100**
**D-5068 Odenthal-Neschen (DE)**

**EP 0 023 671 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Verfahren zur Herstellung kationischer Farbstoffe

Aus der DE-B-1 083 000 ist ein Verfahren zur Herstellung kationischer Farbstoffe der allgemeinen Formel

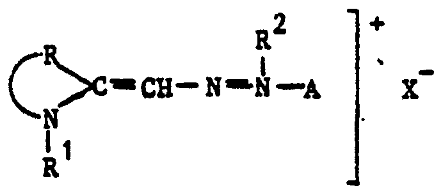

(I)

bekannt, worin

R den restlichen Bestandteil eines 5- oder 6-gliedrigen heterocyclischen Ringes,
$R^1$ einen Alkyl-, Cycloalkyl-, Aralkyl- oder Arylrest,
$R^2$ einen Alkyl-, Cycloalkyl- oder Aralkylrest,
A einen aromatischen oder heterocyclischen Rest und
$X^-$ einen Säurerest bedeutet.

Dieses Verfahren ist dadurch gekennzeichnet, daß man Farbbasen der allgemeinen Formel

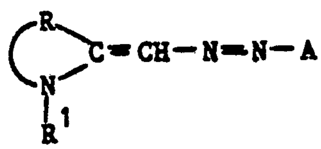

(II)

worin

R, $R^1$ und A die in Formel I angegebene Bedeutung haben,

mit alkylierenden Mitteln unter Quaternierung des mit dem Rest A verbundenen Azostickstoffs umsetzt.

Aus der DE-B-1 205 638 ist die Herstellung von Farbstoffen der allgemeinen Formel

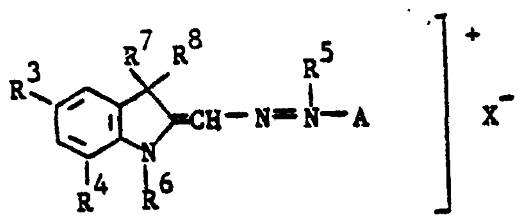

(III)

bekannt, worin

$A^-$ den Rest eines aromatischen Amins der Benzol- oder Naphthalinreihe,
X ein Anion,
$R^7$ und $R^8$ gleiche oder verschiedene oder miteinander verbundene kurzkettige Alkylreste,
$R^3$ und $R^4$ Wasserstoff oder nichtionogene Substituenten und
$R^5$ und $R^6$ Alkylreste bedeuten,

in dem man Farbbasen der allgemeinen Formel

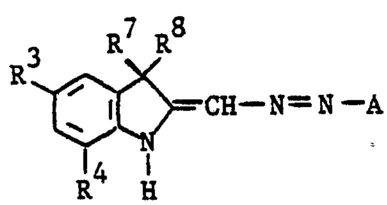

(IV)

worin

A, $R^3$, $R^4$, $R^7$ und $R^8$ die in Formel III angegebene Bedeutung haben,

in Gegenwart säurebindender Mittel mit alkylierenden Mitteln behandelt. Beide Verfahren verwenden als Reaktionsmedium organische Lösungsmittel unter weitgehendem Ausschluß von Wasser, um die Verseifung von Dimethylsulfat zu vermeiden.

In der DE-C-1 770 782 wird die Methylierung dieser Farbbasen in Gegenwart spezieller tertiärer

Amine beschrieben, wobei in allen Beispielen wasserfreie organische Lösungsmittel eingesetzt werden.

Aus der JP-A-50 20 19 ist ein Verfahren zur Herstellung von kationischen Hydrazonfarbstoffen der Formel

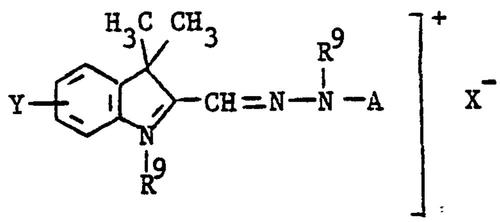

(V)

bekannt, worin

A ein gegebenenfalls nichtionisch substituierter Phenylrest
Y Wasserstoff, Niederalkyl, Alkoxy oder Halogen,
$R^9$ ein niedriger Alkylrest und
$X^-$ ein Anion ist,
durch Umsetzung einer Farbbase der Formel

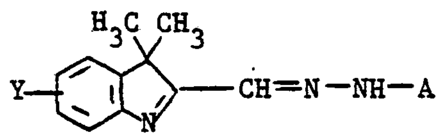

(VI)

mit einem Alkylierungsmittel $R^9$—X in wäßrigem Medium in Gegenwart eines säurebindenden Mittels.

In der JP-A-50 17 431 ist ein Verfahren zur Herstellung kationischer Hydrazonfarbstoffe der Formel

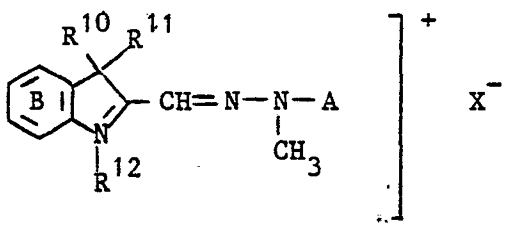

(VII)

beschrieben, in der

$R^{10}$ und $R^{11}$ niedere Alkylreste,
$R^{12}$ einen niederen Alkylrest, Benzyl, β-Phenoxyethyl, β-Cyanethyl und β-Alkoxyethyl bedeuten,
A für einen Arylrest, der nicht dissoziierende Substituenten tragen kann, und
$X^-$ für ein Anion stehen

und in der

Ring B ebenfalls nicht dissoziierende Substituenten tragen kann,
durch Umsetzung einer Azobase der Formel

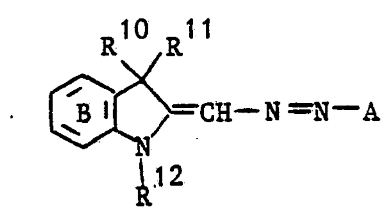

(VIII)

mit Dimethylsulfat oder Methylhalogeniden in Anwesenheit von Magnesiumoxid.

Beide Verfahren führen wegen der gleichzeitig eintretenden Verseifung der Alkylierungsmittel zu Endprodukten, die mit Farbsalzen der Ausgangsbasen verunreinigt sind. Solche Farbstoffe weisen gegenüber den reinen Farbstoffen erhebliche Nachteile auf; sie ergeben z.B. auf Materialien aus Polyacrylnitril stumpfere Färbungen mit geringerer Licht- und Sublimierechtheit.

Schließlich ist aus der DE-A-2 509 622 ein Verfahren zur Herstellung von kationischen Hydrazonfarbstoffen durch Quaternierung von Azobasen mit Dimethylsulfat in Lösung und in Gegenwart eines säurebindenden Mittels bekannt, das charakterisiert ist durch die Anwendung eines Dimethylsulfatüberschusses von 100-300 % pro mol Vorprodukt, durch Verwendung einer wäßrigen Lösung mit wenigstens 30 % Wasser als Reaktionsmedium und durch Verwendung von 2,0-3,5 mol Magnesiumoxid pro mol Vorprodukt. Kennzeichnendes Merkmal dieses Verfahrens ist ein extrem hoher Überschuß von Dimethylsulfat und ein entsprechend hoher Einsatz von Magnesiumoxid als säurebindendes Mittel. Außerdem geht aus der Beschreibung hervor, daß das Verfahren bei Temperaturen zwischen 70 und 120 °C durchgeführt wird. Für Azofarbstoffbasen mit Schmelzpunkten, die erheblich höher als 100 °C liegen, sieht der Text der Patentschrift den Zusatz von aromatischen Co-Lösungsmitteln vor. Als geeignete Lösungsmittel werden u.a. Benzol, Toluol, Xylol, o-Dichlor-benzol und Monochlorbenzol beschrieben. Die Verseifungsprodukte des überschüssigen Dimethylsulfates stellen eine Abwasserbelastung dar, weshalb ein verfahren erwünscht ist, bei dem der Überschuß an Dimethylsulfat so gering wie möglich gehalten werden kann.

Gegenstand der Erfindung ist ein Verfahren zur Herstellung von kationischen Hydrazonfarbstoffen der allgemeinen Formel

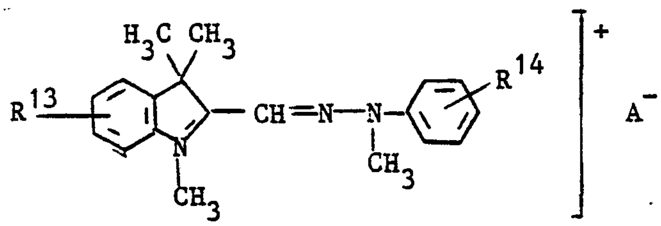

(IX)

worin

$R^{13}$ und $R^{14}$ unabhängig voneinander für Wasserstoff, $C_1$-bis $C_4$-Alkyl, $C_1$-bis $C_4$-Alkoxy oder Halogen, insbesondere Chlor oder Brom, stehen und

$A^-$ einen anionischen Rest bedeutet,

durch Umsetzung von Azobasen der allgemeinen Formel

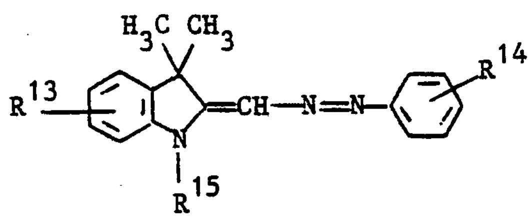

(X)

in welcher

$R^{13}$ und $R^{14}$ die gleiche Bedeutung wie in Formel IX haben und

$R^{15}$ für Wasserstoff oder die Methylgruppe steht,

mit Dimethylsulfat in einem Gemisch von Wasser und einem organischen Lösungsmittel und in Gegenwart von einem säurebindenden Mittel, dadurch gekennzeichnet, daß man

a) als organisches Lösungsmittel aromatische oder aliphatische Chlorkohlenwasserstoffe verwendet,

b) bei einer Reaktionstemperatur von 10-60 °C, vorzugsweise von 20-45 °C, arbeitet,

c) einen 5-90 %igen, vorzugsweise 10-75 %igen, Überschuß an Dimethylsulfat einsetzt und

d) die Reaktion bei einem pH von 5-10, vorzugsweise 6-8, ablaufen läßt.

Geeignete Ausgangsmaterialien der Formel X sind in den Deutschen Patentschriften 1 083 000 und 1 205 638 beschrieben.

Anstelle der Farbbasen X können auch die entsprechenden Farbsalze, beispielsweise Hydrochloride, Sulfate oder Nitrate, verwendet werden. Die Menge des säurebindenden Mittels ist dann so zu berechnen, daß das Farbsalz zunächst in die Base überführt wird, da nur die Farbbase der Methylierung zugänglich ist.

Als aliphatische Chlorkohlenwasserstoffe eignen sich :

Methylenchlorid, Chloroform, 1,2-Dichlor-ethan und 1,2-Dichlor-propan ; unter diesen Lösungsmitteln ist 1,2-Dichlor-propan besonders bevorzugt.

Als aromatische Chlorkohlenwasserstoffe eignen sich :

Chlorbenzol; o-Dichlor-benzol, Chlortoluole und Dichlortoluole ; unter diesen Lösungsmitteln ist Chlorbenzol besonders bevorzugt.

Bezogen auf die eingesetzte Farbstoffbase werden die Chlorkohlenwasserstoffe im Gewichtsverhältnis 2 : 1 bis 0,3 : 1 verwendet.

Als säurebindende Mittel eignen sich :

Magnesiumoxid, Magnesiumcarbonat, Natriumbicarbonat, Lithiumhydroxid, Kaliumbicarbonat und Zinkoxid.

Weiterhin eignen sich als säurebindende Mittel Natriumhydroxid, Natriumcarbonat, Kaliumhydroxid und Kaliumcarbonat. Bei diesen säurebindenden Mitteln ist der Einsatz einer Dosiervorrichtung von Vorteil, die durch ein pH-Meßgerät gesteuert wird.

Die Methylierung ist beendet, wenn der Gehalt an Azobase, bezogen auf methyliertes Endprodukt, unter 0,5 % liegt. Zur Aufarbeitung kann der Farbstoff nach Entfernung des Chlorkohlenwasserstoffes durch Wasserdampfdestillation in üblicher Weise ausgesalzen und isoliert werden ; man kann aber auch die Farbstofflösung mit oder ohne Entfernung des Chlorkohlenwasserstoffes in einem Vakuum-Schaufel-Trockner oder in einem Sprühtrockner zur Trockne eindampfen. Dieses Verfahren hat den Vorteil, daß kein Abwasser anfällt.

Die aromatischen und insbesondere die aliphatischen Chlorkohlenwasserstoffe besitzen ein hohes Lösungsvermögen für die Hydrate der Methosulfate der kationischen Hydrazonfarbstoffe.

Nach einer besonders geeigneten Verfahrensvariante wird daher der kationische Hydrazonfarbstoff in der organischen Phase abgetrennt und die organische Phase im Vakuum eingedampft. Für dieses Verfahren ist 1,2-Dichlor-propan ein besonders gut geeignetes Lösungsmittel.

Nach einem bevorzugten Verfahren setzt man ein durch Kuppeln auf 2,3,3-Trimethyl-indolenin erhaltenes Azosalz als Ausgangsverbindung ein und führt die Methylierung in 2 Stufen aus. Nach der Methylierung am Indolenin-Stickstoff mit insbesondere 1,3-1,9 mol dimethylsulfat bei 20-60 °C in einem Wasser/Chlorkohlenwasserstoff-Gemisch im bevorzugten Gewichtsverhältnis von 0,1: 1 bis 2,0: 1 wird die Wasserphase, die praktisch nur anorganische Salze enthält, abgeschieden. Zur 2-Methylierungsstufe wird die verbleibende organische, vorzugsweise 5-15 % Wasser enthaltende, Phase mit 1,3-1,9 mol Dimethylsulfat bei 20-60 °C behandelt. Auch hier kommt man durch Eindampfen der organischen Phase zu einem Farbstoff ausgezeichneter Qualität. Dieses Verfahren unter Anwendung von 1,2-Dichlor-propan als Lösungsmittel ist eine besonders bevorzugte Verfahrensvariante.

Ein besonders niedriger Überschuß an Dimethylsulfat ist ausreichend, wenn man die Umsetzung der durch Kuppeln auf 2,3,3-Trimethyl-indolenin erhaltenen Azosalze zu den entsprechenden Hydrazonfarbstoffen in folgender Weise ausführt : Das Azosalz wird in einem Gemisch von Chlorkohlenwasserstoff und Wasser eingesetzt und mit der äquivalenten Menge einer Alkalihydroxid- oder -carbonatlösung bei 40-60 °C neutralisiert. Die Umwandlung des in beiden Medien schwerlöslichen Azosalzes zur freien Base läuft hierbei rasch und quantitativ ab. Durch Abscheidung der wäßrigen Salzlösung erhält man die Lösung der Azobase im Chlorkohlenwasserstoff. Dieser Lösung setzt man ein säurebindendes Mittel zu und führt dann die Methylierung bei 35-60 °C mit 2,05 bis 2,6 mol, insbesondere mit 2,1 bis 2,3 mol, Dimethylsulfat durch. Nach der Dimethylsulfat-Zugabe wird der Wassergehalt der reagierenden Mischung auf 5-10 % eingestellt und die Methylierung in Gegenwart dieser Wassermenge zu Ende geführt. Die durch Neutralisierung der entstandenen Methylschwefelsäure gebildeten salze sowie ein geringer Überschuß des säurebindenden Mittels können nach erneuter Wasserzugabe als wäßrige Lösung durch Phasenscheidung entfernt werden. Durch Eindampfen der Reaktionsmischung oder der von Fremdsalzen befreiten organischen Phase erhält man den Hydrazonfarbstoff in ausgezeichneter Qualität und Ausbeute. Unter Anwendung von 1,2-Dichlorpropan und von Magnesiumoxid als säurebindendes Mittel bei der Methylierung ist auch dieses Verfahren eine weitere besonders bevorzugte Herstellungsvariante.

Die so hergestellten Farbstoffe zeichnen sich durch einen extrem niedrigen Gehalt an unmethylierter Azofarbbase aus ; er liegt stets unter 0,5 %, in den meisten Fällen bei 0,1-0,2 %. Farbstoffe dieser Reinheit eignen sich besonders zum Färben von Polyacrylnitril in brillanten lichtechten Farbtönen vom grünstichigen Gelb bis zum Goldgelb.

Beispiel 1

81,2 g des durch Kuppeln von diazotiertem p-Anisidin auf 1,3,3-Trimethyl-2-methylen-indolin und Überführen in die Farbbase erhaltenen Vorproduktes mit einem Wassergehalt von 62 ≙ 30,7 g trocknes Vorprodukt werden mit 40 g Chlorbenzol auf 90 °C erwärmt, hierbei bildet sich eine Emulsion der Reaktionspartner. Nach Abkühlen auf 40 °C werden 22 g Dimethylsulfat zugetropft ; die Temperatur fällt auf 35 °C. Mit Hilfe eines Tropftrichters, dessen Zulauf durch eine pH-Elektrode gesteuert wird, werden innerhalb von 5 h bei 35 °C und bei pH 7 22 ml 10 %ige Natronlauge eingetropft. Im Dünnschichtchromatogramm ist dann praktisch kein Vorprodukt mehr nachweisbar. Das Reaktionsgemisch wird auf 90 °C erwärmt, durch Verseifung des noch Vorhandenen Dimethylsulfates sinkt der pH-Wert auf 0,7 bis 1 ab. Chlorbenzol wird nun mit Wasserdampf abdestilliert, wobei der Farbstoff in wäßriger Lösung in 200 ml zurückbleibt. Zur heißen Lösung gibt man 6 g Kochsalz. Beim Abkühlen kristallisiert der Farbstoff aus. Man läßt einige Stunden nachrühren, saugt ab und wäscht den Preßkuchen mit 25 ml 3 %iger Kochsalzlösung. Nach Trocknen im Vakuum erhält man 40,5 g des kationischen Hydrazonfarbstoffes, der Polyacrylnitrilmaterialien in lichtechten goldgelben Tönen anfärbt.

Verwendet man anstelle der Farbbase aus 4-Anisidin und 1,3,3-Trimethyl-2-methylen-indolin Farbbasen, die man durch Kuppeln von 4-Anisidin auf 1,3,3,5-Tetramethyl-2-methylen-indolin, 5-Chlor-1,3,3-trimethyl-2-methylen-indolin, 5-Methoxy-1,3,3-trimethyl-2-methylen-indolin oder 5-Ethoxy-1,3,3-trimethyl-2-methylen-indolin erhält, und verfährt sonst in gleicher Weise, so gelangt man ebenfalls zu wertvollen kationischen Hydrazonfarbstoffen.

## Beispiel 2

74,1 g des Vorproduktes, das man durch Kuppeln von diazotiertem 4-Toluidin auf 1,3,3-Trimethyl-2-methylen-indolin und Überführen in die Azobase erhält, mit einem Wassergehalt von 60,7 % ≙ 29,1 g trockenes Vorprodukt werden mit 40 g Chlorbenzol auf 90 °C erwärmt und die erhaltene Suspension auf 40 °C wieder abgekühlt. Man tropft nun 20 g Dimethylsulfat ≙ 0,159 mol ein. Mit Hilfe eines Tropftrichters, dessen Zulauf durch eine pH-Elektrode gesteuert wird, werden innerhalb von 5,5 h bei 35 °C und einem pH-Wert von 7 18 ml 10 %ige Natronlauge eingetropft. Im Dünnschichtchromatogramm sind nach dieser Reaktionszeit nur noch Spuren des Ausgangsmaterials nachzuweisen. Es wird nun Chlorbenzol mit Wasserdampf abdestilliert und der Hydrazonfarbstoff mit 3 % Kochsalz, berechnet auf das Reaktionsvolumen, ausgesalzen, abgesaugt, mit 50 ml 3 %iger Kochsalzlösung gewaschen und im Vakuum getrocknet. Man erhält 31,7 g des kationischen Hydrazonfarbstoffes.

Verwendet man anstelle der hier eingesetzten Azobase äquimolekulare Mengen der Azobasen aus diazotiertem 4-Toluidin und 5-Chlor-1,3,3-trimethyl-2-methylen-indolin, 5-Methoxy-1,3,3-trimethyl-2-methylen-indolin, 7-Methoxy-1,3,3-trimethyl-2-methylen-indolin und 5-Chlor-7-methoxy-1,3,3-trimethyl-2-methylen-indolin und Verfährt sonst in gleicher Weise, so erhält man ebenfalls wertvolle kationische Hydrazonfarbstoffe.

## Beispiel 3

154 g des Vorproduktes, das man durch Kuppeln von diazotiertem 4-Anisidin auf 1,3,3-Trimethyl-2-methylen-indolin und Überführen in die Azobase erhält, werden mit 240 g Wasser und 250 g 1,2-Dichlorpropan bei Raumtemperatur verrührt. Anschließend setzt man 12 g basisches Magnesiumcarbonat zu und läßt dann 90 g Dimethylsulfat einfließen. Nach einer Induktionsphase von 30-60 min bei 20-25 °C setzt die Reaktion ein, dabei verfärbt sich das gelbe Vorprodukt durch den allmählich entstehenden Farbstoff nach rot. Während der anschließenden ca. 1 stündigen exothermen Reaktionsphase hält man die Temperatur durch vorsichtige Wasserkühlung bei 23-25 °C. Da der methylierte Farbstoff sich in der organischen Phase zum größten Teil löst, wird die Reaktionsmischung dünnflüssig. Nach Abklingen der exothermen Reaktion rührt man ca. 15 h bei 20-25 °C nach, anschließend heizt man in 4 h auf 60 °C und rührt 1 h bei 60 °C nach. Bei 60 °C werden die Reste Dimethylsulfat rasch hydrolysiert. Der Vorproduktgehalt wird nun dünnschichtchromatographisch bestimmt, er liegt unter 0,2 %. Der pH beträgt 6-6,5. Durch Zugabe von 10-15 ml 30 %iger Salzsäure stellt man den pH auf 2-3 und destilliert 1,2-Dichlor-propan mit Wasserdampf ab. Der Farbstoff wird nun mit Kochsalz ausgesalzen, nach mehrstündigem Nachrühren wird die Farbstoff-suspension auf pH 5 gestellt, der Farbstoff abgesaugt und mit 750 ml 7 %iger Kochsalzlösung gewaschen und im Vakuum auf eine Restfeuchte von unter 4 % getrocknet. Ausbeute : 186 g kationischer Hydrazonfarbstoff, Vorproduktgehalt : 0,1 %.

Verwendet man anstelle der hier eingesetzten Azobase Vorprodukte, die man durch Kuppeln von diazotiertem Anilin, 4-Toluidin oder von 3-Chlor-4-anisidin auf 1,3,3-Trimethyl-2-methylen-indolin und Überführen in die Farbbase erhält, und verfährt sonst in gleicher Weise, so erhält man ebenfalls wertvolle kationische Hydrazonfarbstoffe.

## Beispiel 4

Der durch Kuppeln von diazotiertem p-Anisidin auf 2,3,3-Trimethyl-indolenin erhaltene Azofarbstoff wird mit Natronlauge in die Farbbase überführt und abgesaugt. 40,8 g des feuchten Vorproduktes ≙ 29,3 g trockener Farbbase werden mit 40 g Chlorbenzol und 34 g Wasser 10 min auf 90 °C erwärmt und anschließend auf 30 °C abgekühlt. Bei 30 °C werden unter leichter Kühlung 40 g Dimethylsulfat (0,32 mol) eingetropft. Der pH fällt bis 2,2. Mit Hilfe einer durch ein pH-Gerät gesteuerten Dosiervorrichtung wird nun durch Zutropfen von 10 %iger Natronlauge der pH auf 7 eingestellt und 5 h bei 30-35 °C gerührt. Im Dünnschichtchromatogramm sind nach 5 h nur noch Spuren des Indolenin-Vorproduktes und des Tribasen-Vorproduktes (1-Methylierungsstufe) nachzuweisen. Insgesamt werden 64 ml 10%ige Natronlauge eingetropft. Man erwärmt das Reaktionsgemisch nun auf 90 °C, wobei der pH auf 1,0 fällt. Mit Wasserdampf destilliert man Chlorbenzol ab. Das Reaktionsvolumen beträgt nun 300 ml. Man salzt mit 1,5 % Kochsalz, bezogen auf das Reaktionsvolumen, bei 90 °C aus, dann läßt man die Suspension des Farbstoffes durch mehrstündiges Nachrühren abkühlen, saugt sie ab und wäscht den Farbstoff mit 50 ml 5%iger Kochsalzlösung. Ausbeute : 40,6 g kationischer Hydrazonfarbstoff, Vorproduktgehalt : 0,2 %.

Verwendet man anstelle der hier eingesetzten Farbbase die Vorprodukte, die man durch Kuppeln von diazotiertem Anilin, 4-Toluidin, 2-Toluidin, 2-Anisidin, 3-Chlor-4-anisidin und 4-Phenetidin auf 2,3,3-Trimethylindolenin erhält, und verfährt sonst in gleicher Weise, so gelangt man ebenfalls zu wertvollen kationischen Hydrazonfarbstoffen.

## Beispiel 5

33 g des Vorproduktes, das man durch Kuppeln von diazotiertem 4-Anisidin auf 2,3,3-Trimethylindolenin in salzsaurer Lösung erhält, werden mit 10 g Chlorbenzol, 75 g Wasser, in dem zuvor 1 g des Anlagerungsproduktes von 10 mol Ethylenoxid an 1 mol Nonylphenol gelöst worden waren, und 5 g Magnesiumoxid verrührt. Das Farbsalz wird hierbei in die Base übergeführt. Bei 25 °C werden unter leichter Kühlung bei pH 9,5 44 g Dimethylsulfat eingetropft ; der pH beträgt dann 8,6. Nach 5 stündigem Rühren bei 25 °C sinkt der pH auf 2,4 ab. Es wird nochmals 1 g Magnesiumoxid zugesetzt, 1 h bei 25 °C gerührt (pH 8,4-7,8) und dann mit 11 ml 10%iger Salzsäure der pH auf 2 eingestellt. Chlorbenzol wird mit Wasserdampf abdestilliert und der Farbstoff mit 3 g Kochsalz ausgesalzen. Nach mehrstündigem Rühren saugt man ab und wäscht mit 200 ml 5 %iger Kochsalzlösung. Ausbeute : 35,9 g kationischer Hydrazonfarbstoff, Vorproduktgehalt : 0,2 %.

Setzt man anstelle des hier verwendeten Vorprodukt-Hydrochlorides die äquimolekularen Mengen der Farbsalze, die man durch Kuppeln von diazotiertem Anilin, 4-Toluidin und 4-Phenetidin auf 2,3,3-Trimethyl-indolenin, 5-Chlor-2,3,3-trimethyl-indolenin, 2,3,3,5-Tetramethyl-indolenin und 5-Methoxy-2,3,3-trimethylindolenin erhält, und verfährt sonst in gleicher Weise, so erhält man gleichfalls wertvolle kationische Hydrazonfarbstoffe.

## Beispiel 6

266 g feuchtes 4-Anisol-azo-indolenin-hydrochlorid mit einem Wassergehalt von 37,6 % ≙ 166,0 g trockenes Farbsalz werden mit 250 ml 1,2-Dichlor-propan bei Raumtemperatur verrührt. Man setzt 20 g Magnesiumoxid zu, wobei die Temperatur um 2-3 °C ansteigt. Die Temperatur der Mischung soll dann 25-27 °C betragen, damit die folgende Methylierung zügig einsetzt. Man läßt nun 60 g Dimethylsulfat einlaufen und wartet den Beginn der Reaktion ab, dabei löst sich das suspendierte Farbstoffhydrochlorid auf. Durch vorsichtige Wasserkühlung hält man die Reaktion bei einer Temperatur von 35-40 °C und dosiert weitere 41 g Dimethylsulfat in 30-60 min bei 35-40 °C zu. Nach dem Ende der Zugabe rührt man weitere 60 min, wobei man die Temperatur durch Verminderung der Kühlung auf 40 °C ansteigen läßt und bei dieser Temperatur weiterrührt. Der pH-Wert liegt zunächst zwischen 7,5-8,5, nach der Dimethylsulfatzugabe sinkt er auf 6,5-6,7 ab und steigt dann langsam wieder auf 7,0 an. Zur Phasenscheidung stellt man nun das Rührwerk ab. Die gelbliche wäßrige Phase, die durch ungelöstes Magnesiumoxid schwach getrübt ist, setzt sich rasch nach unten ab. Die organische Phase ist dunkelrot und klar. Die wäßrige Phase wird abgeschieden, die wäßrige Dichlorpropanphase bleibt im Reaktionsgefäß.

Man setzt nun 8,5 g Magnesiumoxid zu und läßt in 30-60 min 79,5 g Dimethylsulfat bei 30-35 °C zulaufen. Dann rührt man 8-10 h bei 25-30 °C nach und heizt dann vorsichtig und gleichmäßig in 3 h auf 60 °C an. Nach Dünnschichtchromatogramm liegt der Vorproduktgehalt im fertig methylierten Farbstoff unter 0,1 %. Man setzt nun 250 g Wasser zu und rührt 30 min bei 60-65 °C nach. Der pH soll sich auf 6,0-6,5 einstellen. Durch Zusatz von 10 g 30 %iger Salzsäure bringt man den pH-Wert auf 3 und stellt dann den Rührer zur Phasentrennung ab. Die farbstoffhaltige Dichlorpropanphase setzt sich unten als dunkelrote klare Flüssigkeit ab, sie wird abgeschieden und im Dünnschichtverdampfer oder im Vakuum-Schaufel-Trockner bei einer Temperatur von 60 °C eingedampft und getrocknet. Man erhält 215 g eines kationischen Hydrazonfarbstoffes mit einem Gehalt an Vorprodukten von unter 0,1 %.

Verwendet man anstelle des 4-Anisol-azo-indolenin-hydrochlorides entsprechende Indoleninfarbsalze, die durch Kuppeln von Anilin, 4-Toluidin, 2-Toluidin, 2-Anisidin, 4-Phenetidin und 3-Chlor-4-anisidin auf 2,3,3-Trimethyl-indolenin, 2,3,3,5-Tetramethyl-indolenin, 2,3,3-Trimethyl-5-methoxy-indolenin, 2,3,3-Trimethyl-5-ethoxy-indolenin, 2,3,3-Trimethyl-7-methoxy-indolenin, 2,3,3-Trimethyl-5-chlor-indolenin und 2,3,3-Trimethyl-5-chlor-7-methoxy-indolenin erhalten werden, und verfährt sonst in gleicher Weise, so erhält man ebenfalls wertvolle kationische Hydrazonfarbstoffe.

## Beispiel 7

267 g feuchtes 4-Anisol-azo-indolenin mit einem Wassergehalt von 37,4 % ≙ 167 g trockenes Farbsalz (colorimetrisch bestimmter Reingehalt 95 % ≙ 159 g reines Farbsalz) werden mit 250 ml 1,2-Dichlorpropan angerührt. Bei 50-60 °C läßt man in ca. 1 h 200 ml 15,5 %ige Sodalösung zutropfen, so daß am Ende ein pH-Wert von 7 erreicht wird. Die Reaktionsmischung wird filtriert und die Lösung der Farbbase in Dichlorpropan von der wäßrigen Oberphase abgetrennt. Die organische Phase wird mit 13 g Magnesiumoxid versetzt, anschließend läßt man unter Kühlung bei 40-50 °C 134 g Dimethylsulfat zutropfen. Man rührt ca. 1 h bis zur beginnenden Kristallbildung nach und tropft dann innerhalb von 1 h bei 40-50 °C 40 g Wasser zu. Anschließend hält man die Temperatur weitere 5 h 40-50 °C, heizt dann in 1 h auf 60 °C und hält die Temperatur weitere 60 min bei 60 °C. Nach Dünnschichtchromatogramm liegt der Vorprodukt-Gehalt im fertig methylierten Farbstoff unter 0,1 %. Man setzt nun 100 ml Wasser zu und rührt weitere 15 min bei 60 °C ; der pH-Wert der Mischung stellt sich auf 6,0-6,5 ein. Man stellt den Rührer zur Phasentrennung ab. Die untere wäßrige Phase wird abgeschieden. Nach Eindampfen und Trocknen bei 60 °C im Vakuum-Schaufeltrockner erhält man 220 g des kationischen Hydrazonfarbstoffes mit einem

Vorproduktgehalt von unter 0,1 %.

Verwendet man anstelle des 4-Anisol-azo-trimethylindoleninhydrochlorides äquimolare Mengen entsprechender Indoleninfarbsalze, die durch Kuppeln von Anilin, 4-Toluidin, 2-Anisidin und 3-Chlor-4-anisidin auf 2,3,3-Trimethylindolenin, 2,3,3,5-Tetramethyl-indolenin, 2,3,3-Trimethyl-5-methoxy-indolenin, 2,3,3-Trimethyl-5-ethoxy-indolenin, 2,3,3-Trimethyl-7-methoxy-indolenin, 2,3,3-Trimethyl-5-chlor-indolenin und 2,3,3-Trimethyl-5-chlor-7-methoxy-indolenin erhalten werden, und verfährt sonst in gleicher Weise, so erhält man ebenfalls wertvolle kationische Hydrazonfarbstoffe.

**Ansprüche**

1. Verfahren zur Herstellung von kationischen Hydrazonfarbstoffen der allgemeinen Formel

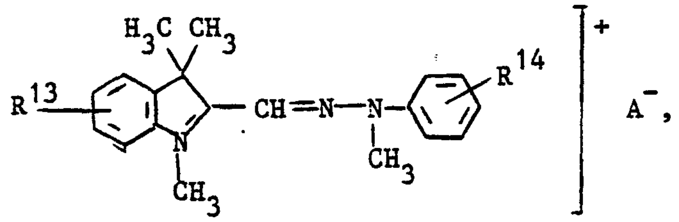

worin

$R^{13}$ und $R^{14}$ unabhängig voneinander für Wasserstoff, $C_1$- bis $C_4$-Alkyl, $C_1$- bis $C_4$-Alkoxy oder Halogen, insbesondere Chlor oder Brom, stehen und

$A^-$ einen anionischen Rest bedeutet,

durch Umsetzung von Azobasen der allgemeinen Formel

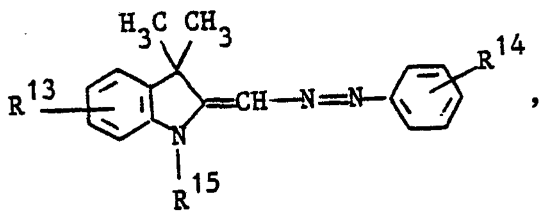

worin

$R^{13}$ und $R^{14}$ die oben genannte Bedeutung haben und

$R^{15}$ für Wasserstoff oder die Methylgruppe steht,

mit Dimethylsulfat in einem Gemisch von Wasser und einem organischen Lösungsmittel und in Gegenwart von einem säurebindenden Mittel, dadurch gekennzeichnet, daß man

a) als organische Lösungsmittel aromatische oder aliphatische Chlorkohlenwasserstoffe verwendet,

b) bei einer Reaktionstemperatur von 10-60 °C arbeitet,

c) einen 5-90 %igen Überschuß an Dimethylsulfat einsetzt,

d) die Reaktion bei einem pH von 5-10 ablaufen läßt.

2. Verfahren gemäß Anspruch 1, dadurch gekennzeichnet, daß als aliphatischer Chlorkohlenwasserstoff 1,2-Dichlor-propan verwendet wird.

3. Verfahren gemäß Anspruch 1, dadurch gekennzeichnet, daß als säurebindendes Mittel Natriumhydroxid als 5-10 %ige Lösung unter Verwendung einer pH-gesteuerten Dosiervorrichtung eingesetzt wird.

4. Verfahren gemäß Anspruch 1, dadurch gekennzeichnet, daß anstelle der Farbbasen gemäß Anspruch 1 deren Salze mit anorganischen oder organischen Säuren eingesetzt werden, wobei durch Zusatz säurebindender Mittel im ersten Reaktionsschritt die Farbbase in Freiheit gesetzt wird.

5. Verfahren gemäß Anspruch 4, dadurch gekennzeichnet, daß man die Freisetzung der Farbbasen aus den Farbsalzen in einer Phasenmischung aus Wasser und einem Chlorkohlenwasserstoff durchführt.

6. Verfahren gemäß Anspruch 1, dadurch gekennzeichnet, daß die Isolierung des Farbstoffes durch Eindampfen des ganzen Reaktionsansatzes mit oder ohne vorherige Entfernung des Halogenkohlenwasserstoffes erfolgt.

7. Verfahren gemäß Anspruch 1, dadurch gekennzeichnet, daß der Farbstoff gemäß Anspruch 1 in Form des Hydrates des Methosulfates im Chlorkohlenwasserstofflösungsmittel, insbesondere 1,2-Dichlorpropan, aufgenommen wird, die Lösungsmittelphase abgetrennt wird und der Farbstoff anschließend durch Verdampfung des Lösungsmittels isoliert wird.

8. Verfahren gemäß Anspruch 1, dadurch gekennzeichnet, daß man Azobasen der Formel des Anspruchs 1, worin $R^{15}$ für Wasserstoff steht, in einem Gemisch von Wasser und Chlorkohlenwasserstoff

mit 1,3-1,9 mol Dimethylsulfat bei 20-60 °C in einer 1. Reaktionsstufe umsetzt, die wäßrige Schicht abtrennt und die verbleibende wasserhaltige organische Phase in einer 2. Reaktionsstufe mit 1,3-1,9 mol Dimethylsulfat bei 20-60 °C behandelt.

9. Verfahren gemäß Anspruch 8, dadurch gekennzeichnet, daß man für die 1. Reaktionsstufe ein Gemisch aus Chlorkohlenwasserstoff und Wasser mit 10-70 Gewichtsprozent Wasser und in der 2. Reaktionsstufe ein Gemisch aus Chlorkohlenwasserstoff und Wasser mit 5-15 Gewichtsprozent Wasser verwendet.

10. Verfahren gemäß Anspruch 1, dadurch gekennzeichnet, daß man Azobasen der Formel des Anspruchs 1, worin $R^{15}$ für Wasserstoff steht, in einem Chlorkohlenwasserstoff mit 2,1-2,5 mol Dimethylsulfat bei 35-60 °C umsetzt, wobei man der reagierenden Mischung nach der Dimethylsulfat-Zugabe 5-10 % Wasser zusetzt.

**Claims**

1. Process for the preparation of cationic hydrazone dyestuffs of the general formula

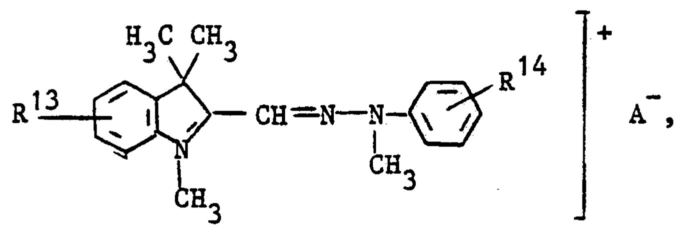

wherein

$R^{13}$ and $R^{14}$ independently of one another represent hydrogen, $C_1$- to $C_4$-alkyl, $C_1$- to $C_4$-alkoxy or halogen, in particular chlorine or bromine, and

$A^-$ denotes an anionic radical,

by reacting azo bases of the general formula

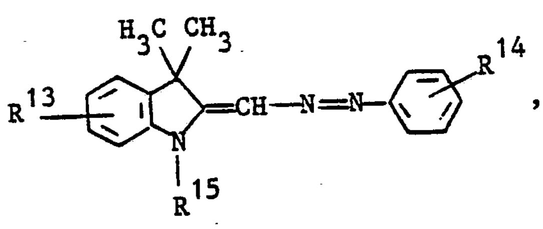

wherein

$R^{13}$ and $R^{14}$ have the abovementioned meaning and

$R^{15}$ represents hydrogen or the methyl group,

with dimethyl sulphate in a mixture of water and a organic solvent and in the presence of an acid-binding agent, characterised in that a) aromatic or aliphatic chlorinated hydrocarbons are used as the organic solvents, b) the reaction is carried out at a temperature of 10-60 °C, c) 5-90 % excess of dimethyl sulphate is employed and d) the reaction is allowed to proceed at a pH of 5-10.

2. Process according to Claim 1, characterised in that 1,2-dichloro-propane is used as the aliphatic chlorinated hydrocarbon.

3. Process according to Claim 1, characterised in that sodium hydroxide in the form of a 5-10 % strength solution is employed as the acid-binding agent, using a metering device controlled by the pH.

4. Process according to Claim 1, characterised in that instead of the colour bases according to Claim 1, salts thereof with inorganic or organic acids are employed, the colour base being liberated by the addition of acid-binding agents in the first reaction step.

5. Process according to Claim 4, characterised in that the colour bases are liberated from the colour salts in a phase mixture of water and a chlorinated hydrocarbon.

6. Process according to Claim 1, characterised in that the dyestuff is isolated by evaporating the entire reaction batch, with or without prior removal of the halogenated hydrocarbon.

7. Process according to Claim 1, characterised in that the dyestuff according to Claim 1 is taken up, in the form of the hydrate of the methosulphate, in a chlorinated hydrocarbon solvent, in particular 1,2-dichloro-propane, the solvent phase is separated off and the dyestuff is then isolated by evaporating off the solvent.

8. Process according to Claim 1, characterised in that azo bases of the formula of Claim 1, wherein $R^{15}$ represents hydrogen are reacted with 1.3-1.9 mols of dimethyl sulphate at 20-60 °C in a mixture of

water and chlorinated hydrocarbon in a 1st reaction stage, the aqueous layer is separated off and the water-containing organic phase which remains is treated with 1.3-1.9 mols of dimethyl sulphate at 20-60 °C in a 2nd reaction stage.

9. Process according to Claim 8, characterised in that a mixture of chlorinated hydrocarbon and water containing 10-70 per cent by weight of water is used for the 1st reaction stage and a mixture of chlorinated hydrocarbon and water containing 5-15 per cent by weight of water is used in the 2nd reaction stage.

10. Process according to Claim 1, characterised in that azo bases of the formula of Claim 1 wherein $R^{15}$ represents hydrogen are reacted with 2.1-2.5 mols of dimethyl sulphate at 35-60 °C in a chlorinated hydrocarbon, 5-10 % of water being added to the reacting mixture after the addition of the dimethyl sulphate.

**Revendications**

1. Procédé pour la préparation de colorants cationiques d'hydrazones de formule générale

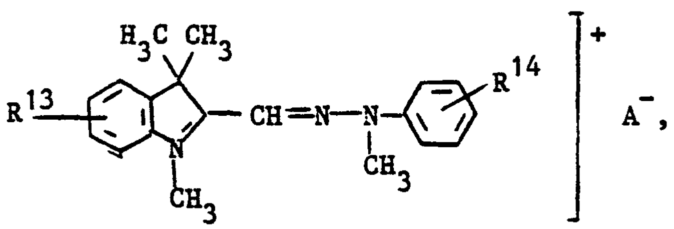

dans laquelle

$R^{13}$ et $R^{14}$ représentent, indépendamment l'un de l'autre, l'hydrogène, un alkyle en $C_1$-$C_4$, un alcoxy en $C_1$-$C_4$ ou un halogène, en particulier le chlore ou le brome, et

$A^-$ représente un reste anionique,

par réaction de bases azoïques de formule générale

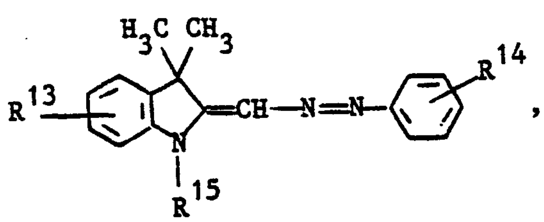

dans laquelle

$R^{13}$ et $R^{14}$ ont la signification indiquée ci-dessus et

$R^{15}$ représente l'hydrogène ou un groupe méthyle,

avec le sulfate de diméthyle dans un mélange d'eau et d'un solvant organique et en présence d'un agent accepteur d'acide, caractérisé en ce que

a) on utilise comme solvant organique des hydrocarbures chlorés aromatiques ou aliphatiques,

b) on opère à une température de réaction de 10-60 °C,

c) on utilise un excès de 5-90 % de sulfate de diméthyle et

d) on effectue la réaction à un pH de 5-10.

2. Procédé selon la revendication 1, caractérisé en ce qu'on utilise comme hydrocarbure chloré aliphatique le 1,2-dichloropropane.

3. Procédé selon la revendication 1, caractérisé en ce qu'on utilise comme agent accepteur d'acide l'hydroxyde de sodium en solution à 5-10 % en utilisant un appareil de dosage commandé par le pH.

4. Procédé selon la revendication 1, caractérisé en ce que l'on utilise, au lieu des bases de colorants selon la revendication 1, leurs sels avec des acides inorganiques ou organiques, la base de colorant étant libérée dans un premier stade de réaction par addition d'agents accepteurs d'acides.

5. Procédé selon la revendication 1, caractérisé en ce que l'on effectue la mise en liberté des bases de colorant à partir des sels de colorants dans un mélange de phases d'eau et d'un hydrocarbure chloré.

6. Procédé selon la revendication 1, caractérisé en ce que l'isolement du colorant s'effectue par évaporation de tout le mélange de réaction avec ou sans élimination préalable de l'hydrocarbure halogéné.

7. Procédé selon la revendication 1, caractérisé en ce que le colorant selon la revendication 1 est repris sous forme de l'hydrate du méthylsulfate dans l'hydrocarbure chloré comme solvant, en particulier

le 1,2-dichloropropane, on sépare la phase de solvant et ensuite on isole le colorant par évaporation du solvant.

8. Procédé selon la revendication 1, caractérisé en ce que l'on fait réagir dans une première étape de réaction des bases azoïques de la formule de la revendication 1, dans laquelle $R^{15}$ représente l'hydrogène, avec 1,3-1,9 mol de sulfate de diméthyle, à 20-60 °C, dans un mélange d'eau et d'hydrocarbure chloré, on sépare la couche aqueuse et on traite dans une seconde étape de réaction la phase organique restante contenant de l'eau avec 1,3-1,9 mol de sulfate de diméthyle à 20-60 °C.

9. Procédé selon la revendication 8, caractérisé en ce que l'on utilise, pour la première étape de réaction, un mélange d'hydrocarbure chloré et d'eau à 10-70 % en poids d'eau et dans la seconde étape de réaction un mélange d'hydrocarbure chloré et d'eau à 5-15 % en poids d'eau.

10. Procédé selon la revendication 1, caractérisé en ce que l'on fait réagir des bases azoïques de formule de la revendication 1, dans laquelle $R^{15}$ représente l'hydrogène, avec 2,1-2,5 mol de sulfate de diméthyle à 35-60 °C dans un hydrocarbure chloré, en ajoutant au mélange en réaction 5-10 % d'eau après l'addition de sulfate de diméthyle.